# EUROPÄISCHE PATENTSCHRIFT

(11) **EP 0 384 273 B1**
(45) Veröffentlichungstag und Bekanntmachung des Hinweises auf die Patenterteilung: **08.09.1993**
(21) Anmeldenummer: 90102845.6
(22) Anmeldetag: 14.02.1990
(51) Int. Cl.: A23B 4/03, A23L 1/31, A23K 1/10

(54) **Verfahren zur Herstellung von Fleischbrätstücken und Verwendung derselben**
Process for producing pieces of minced meat, and use thereof
Procédé de préparation de morceaux de viande hachée et leur utilisation

(30) Priorität: 23.02.1989 CH 652/89
(43) Veröffentlichungstag der Anmeldung: 29.08.1990
(73) Patentinhaber: Homag AG, CH-5734 Reinach (CH)
(72) Erfinder: Burgherr, Heinz, CH-5737 Menziken (CH)
(74) Vertreter: Blum, Rudolf Emil Ernst

(56) Entgegenhaltungen:
- EP-A- 0 004 627
- AU-B- 523 911
- GB-A- 1 022 169
- US-A- 4 450 183
- US-A- 4 781 937

## Beschreibung

Die vorliegende Erfindung betrifft ein Verfahren zur Herstellung von Stücken mit einem hohen Verhältnis Oberfläche/Volumen aus getrocknetem Fleischbrät, ein nach dem Verfahren hergestelltes Fleischbrätstück und die Verwendung desselben.

AU-B-50 905/79 beschreibt ein Herstellungsverfahren für ein halbfeuchtes Produkt mit einem Feuchtigkeitsgehalt von 15-45 % sowie mit 10-60 % pflanzlichem Material. Durch die Zugabe von komplexen Kohlehydraten zum rohen Fleisch kann freies Wasser im wesentlichen gebunden werden.

US-A-4 781 937 offenbart die Herstellung eines gelochten und entfeuchteten, aber rehydratisierbaren Nahrungsmittels in Flockenform oder als Pulver, welches neben Fleisch auch pflanzliches Material enthält und einen spezifizierten Anteil Fett aufweisen muss.

GB-A-1 022 169 beschreibt ein Verfahren zur Herstellung eines dehydratisierten Produktes aus Fisch und kohlehydrathaltigem Material.

Keines dieser Dokumente offenbart die Möglichkeit reines Fleisch ohne pflanzliche Zusatzstoffe zu verarbeiten.

US-A-4 450 183 betrifft ein Verfahren zur Herstellung getrockneter Fleisch-Emulsionen. Das Verfahren soll raschere Trocknung, grösseren Fettanteil, verbesserte Rehydratisierbarkeit und bessere Textur der rehydratisierten Fleischemulsionen bewirken. Die Fleischemulsion wird bevorzugt aus rotem Fleisch mit einem pH unter 6 und mit Eis hergestellt. Der pH-Wert ist bei diesen Verfahren sehr wichtig. Die direkte Verarbeitung resp. Trocknung von Fleischbrät ohne pH-Einstellung und Wasserzusatz wird nicht erwähnt.

Aus der CH-B-644 498 resp. der EP-A-0 004 627 ist ein Knabberartikel aus getrocknetem Fleischbrät in Form von Chips bekannt. Zur Herstellung dieser Chips wird Fleisch einschliesslich geeignete Zutaten zu Fleischbrät verarbeitet, dieses in einen Pressstrang überführt, in dieser Form gegart, dann in einer Schneidvorrichtung geschnitten und abschliessend getrocknet.

Ziel der Erfindung ist es ein Verfahren zu schaffen, das ebenfalls von Fleischbrät ausgeht aber viel weniger aufwendig ist.

Dieses Ziel wird erfindungsgemäss mit den kennzeichnenden Merkmalen des Patentanspruches 1 erreicht.

Der mit der Erfindung erreichbare Vorteil besteht darin, ein qualitativ hochstehendes, wenig Wasser enthaltendes und dem Trockenfleisch sehr ähnliches Fleischprodukt zu erzeugen.

Das nach dem Verfahren hergestellte Fleischbrätstück ist dadurch gekennzeichnet, dass es flockenförmig ist. Daraus ergibt sich der Vorteil der einfachen Verpackung.

Diese Fleischbrätstücke lassen sich als Nahrungs- oder Futtermittel anwenden. Bei einer bevorzugten Verwendungsform werden die flockenförmigen Stücke einem Futtermittel beigegeben.

Die Herstellung solcher Stücke kann vorzugsweise auf folgende Weise erfolgen.

Fleisch und verschiedene Innereien, z.B. Lunge, Leber, Milz sowie Euter, Schwarten, Separatorenfleisch, usw. werden unter Zugabe von verschiedenen Eiweissprodukten, Phosphat, Salz, usw. in einem Cutter so aufbereitet, dass eine homogene Masse entsteht. Diese Masse wird über eine Pumpe einem Auftragssystem, z.B. 3-Walzen- oder Linealauftrag, zugeführt. Eine weitere Möglichkeit ist die Beschichtung des Bandes über eine Flachdüse. Die Masse wird in Form einer kontinuierlichen Schicht mit einer Dicke von max. 5 mm auf ein umlaufendes Stahlband mit Teflonbeschichtung oder ein feinporiges Gewebeband aus Kunststoffäden aufgetragen. Die Masse wird dann durch eine Trockenkammer geleitet, wobei eine Perforierung der Schicht von Vorteil ist, um das Trocknen zu erleichtern. Nach dem Trocknen wird die Masse gekühlt und anschliessend wird die Schicht durch Reissen zerkleinert, so dass Flocken entstehen.

Diese Flocken haben insbesondere die Vorteile, wenig Gewicht aufzuweisen, sehr haltbar zu sein und können einfach verpackt werden. Ferner sind sie besonders als Beimischung zur Tiernahrung insbesondere Getreideflocken geeignet.

## Patentansprüche

1. Verfahren zur Herstellung von flockenförmigen Stücken aus getrocknetem Fleischbrät, welche aus einem Brät in einer kontinuierlichen, fortlaufend trocknenden Schicht, mit einer Dicke von max. 5 mm im feuchten Zustand, hergestellt, abgekühlt und anschliessend getrocknet werden, dadurch gekennzeichnet, dass das Brät aus Fleisch und Innereien sowie gegebenenfalls aus einem oder mehreren Additiven besteht, wobei die Additive ausgewählt sind aus der Gruppe umfassend: Milcheiweiss, Phosphate, Salz und Aromastoffe.

2. Verfahren nach Anspruch 1, dadurch gekennzeichnet, dass die Schicht während der Trocknung perforiert wird.

3. Verfahren nach einem der Ansprüche 1 oder 2, dadurch gekennzeichnet, dass die Schicht aus Fleischbrät bei einer Temperatur von mindestens 60°C getrocknet wird.

4. Verfahren nach einem der Ansprüche 1 bis 3, dadurch gekennzeichnet, dass die Schicht aus Fleischbrät durch Reissen zerkleinert wird.

5. Verfahren nach einem der Ansprüche 1 bis 3, dadurch gekennzeichnet, dass die Schicht aus Fleischbrät durch Stanzen zerkleinert wird.

6. Stücke, hergestellt nach dem Verfahren gemäss einem der Ansprüche 1-5, dadurch gekennzeichnet, dass sie als Nahrungs- oder Futtermittel verwendet werden.

7. Verwendung der Stücke nach Anspruch 6, dadurch gekennzeichnet, dass sie einem Futtermittel beigegeben sind.

## Claims

1. Process for the production of pieces of dried minced meat in the form of flakes, which are produced from a mince in a continuous, successively drying layer, with a thickness of at most 5 mm in its moist state, cooled and then dried, characterized in that the mince consists of meat and offal as well as optionally of one or more additives, whereby the additives are selected from the group consisting of : milk proteins, phosphates, salt and flavours.

2. Process according to claim 1, characterized in that the layer is perforated during the drying step.

3. Process according to one of claims 1 or 2, characterized in that the layer of minced meat is dried at a temperature of at least 60°C.

4. Process according to one of claims 1 to 3, characterized in that the layer of minced meat is reduced to small pieces by tearing.

5. Process according to one of claims 1 to 3, characterized in that the layer of minced meat is reduced to small pieces by punching.

6. Pieces produced according to the process of one of claims 1 to 5, characterized in that they are used as foodstuff or as feed.

7. Use of the pieces according to claim 6, characterized in that they are added to a feed.

## Revendications

1. Procédé de préparation de morceaux floconneux de viande hachée et séchée, préparés à partir de viande hachée en une couche continue et séchant continuellement, avec une épaisseur de 5 mm au maximum à l'état humide, refroidis et ensuite séchés, caractérisé en ce que la viande hachée est composée de viande et d'abats ainsi que, le cas échéant, d'un ou de plusieurs additifs, les additifs étant choisis dans le groupe composé de: protéines de lait, phosphates, sel et arômes.

2. Procédé selon la revendication 1, caractérisé en ce que la couche est perforée pendant le séchage.

3. Procédé selon l'une des revendications 1 ou 2, caractérisé en ce que la couche de viande hachée est séchée à une température d'au moins 60°C.

4. Procédé selon l'une des revendications 1 à 3, caractérisé en ce que la couche de viande hachée est concassée par déchirure.

5. Procédé selon l'une des revendications 1 à 3, caractérisé en ce que la couche de viande hachée est concassée par poinçonnage.

6. Pièces, préparées selon le procédé selon l'une des revendications 1 à 5, caractérisées en ce qu'elles sont utilisées comme nourriture ou nourriture pour animaux.

7. Utilisation des pièces selon la revendication 6, caractérisée en ce qu'elles sont ajoutées à une nourriture pour animaux.
